# EUROPÄISCHE PATENTSCHRIFT

(11) **EP 0 543 959 B1**
(45) Veröffentlichungstag und Bekanntmachung des Hinweises auf die Patenterteilung: **31.07.1996**
(21) Anmeldenummer: 92909577.6
(22) Anmeldetag: 06.05.1992
(51) Int. Cl.: D21H 27/34, D21F 11/04, D21F 11/08, B32B 29/02, B32B 27/02

(54) **VERFAHREN ZUR HERSTELLUNG EINES MEHRLAGIGEN KARTONS**
PROCESS FOR PRODUCING A MULTILAYER CARDBOARD
PROCEDE DE PRODUCTION D'UN CARTON MULTIJET

(30) Priorität: 14.05.1991 ES 9101472 U
(43) Veröffentlichungstag der Anmeldung: 02.06.1993
(73) Patentinhaber: PAPELERA DEL CENTRO, S.A., 28600 Navalcarnero/Madrid (ES)
(72) Erfinder: Gineste i Cusso, Ramon, 25230 Mollerussa (ES)
(74) Vertreter: Patentanwälte Meinke, Dabringhaus und Partner
(86) Internationale Anmeldenummer: EP9200989
(87) Internationale Veröffentlichungsnummer: WO9220863

(56) Entgegenhaltungen:
- DE-A- 101 090
- DE-A- 1 461 264
- DE-A- 1 949 408
- FR-A- 935 046
- GB-A- 551 610
- GB-A- 759 472
- US-A- 1 335 910
- US-A- 2 543 101
- US-A- 3 892 622
- W. Brecht, Karton und Pappe, 12. Eucepa-Konferenz Berlin, 22.-26. 4. 1968, S. 33 - 43
- EPI, European Paper Institute, Cartonboard Capacity Report, July 1991, S. 1 - 8
- G. Jacobs, Folding Boxboard Trends in Demand, Product Requirements and Production Engineering, Sonderdruck aus dem "Wochenblatt für Papierfabrikation", Nr. 4 (1981), S. 113 - 118
- Die mehrlagige Bahn, Münchner Papiertechnologie-Symposien, Kurzfassungen der Vorträge, München, 24. - 26. 3. 1987
- Multiply Formers, Pulp & Paper, December 1978, S. 89 - 104
- U. Grossmann, Blattbildungseinrichtungen für mehrlagige Erzeugnisse, Sonderdruck aus dem "Wochenblatt für Papierfabrikation", Nr. 6 (1977)
- ABSTRACT BULLETIN; APPLETON, WI, USA 59(1988) July no. 1, p. 40

## Beschreibung

Die Erfindung betrifft ein Verfahren zur Herstellung eines mehrlagigen Kartons, bei welchem auf eine erste feuchte Lage aus zähflüssiger Cellulosemasse wenigstens eine weitere feuchte Lage aus zähflüssiger Cellulosemasse aufgebracht wird und die Lagen anschließend miteinander zur Bildung des mehrlagigen Kartons verpreßt werden.

Für Verpackungen jeder Art, die dazu geeignet sind, tragende Funktionen für das Verpackungsgut zu übernehmen, ist es derzeit üblich, sogenannte Kraftliner aus Pappkarton einzusetzen. Diese Kraftliner zeichnen sich durch eine hohe Reißfestigkeit aus und bestehen bevorzugt aus langfaseriger Cellulose. Um derartige Kraftliner herzustellen, ist es deshalb bisher erforderlich, langfaseriges Holz einzusetzen, z.B. Kiefer oder Tanne. Diese langfaserigen Holzarten haben jedoch die Eigenschaft, sehr langsam zu wachsen, so daß der mehr und mehr steigende Bedarf an derartigen Verpackungen immer mehr dazu führt, daß irreparable Schäden in den Waldbeständen auftreten.

Verfahren zur Herstellung mehrlagiger Kartons nach dem Oberbegriff des Patentanspruchs 1 sind in verschiedenen Ausführungsformen bekannt. So ist in der Druckschrift: Sonderdruck aus dem Wochenblatt für Papierfabrikation Nr. 6 (1977) "Blattbildungseinrichtungen für mehrlagige Erzeugnisse" (U. Großmann), Seiten 1 bis 8, zusammengestellt, wie mehrlagige Kartons hergestellt werden können. Dabei ist unter einer Lage eine auf einer einzelnen Blattbildungseinrichtung hergestellte Faserstoffbahn zu verstehen. Die einzelnen Lagen werden in genügend feuchtem Zustand zusammengeführt und anschließend miteinander verpreßt bzw. zusammengegautscht.

Zur Erhöhung der Festigkeit von einlagigen Produkten ist es seit langem bekannt (beispielsweise aus US-A-1,335,910) ein Verstärkungsgewebe in das einlagige Celluloseprodukt einzubringen. Dabei wird ein Verstärkungsgewebe einfach durch einen Behälter mit Cellulosemasse gezogen, so daß sich oberseitig und unterseitig des Verstärkungsgewebes Beschichtungen aus Cellulose aufbauen. Die Technologie zur Herstellung einlagiger Produkte läßt sich jedoch mit der Technologie zur Herstellung mehrlagiger Produkte nicht vergleichen, die völlig andere Anforderungen und Schwierigkeiten an den Herstellungsprozeß stellt.

Aufgabe der Erfindung ist es, eine Lösung zu schaffen, mit der die Festigkeit von mehrlagigen Kartons verbessert werden kann, ohne daß dazu der Celluloseanteil qualitativ und quantitativ erhöht werden muß.

Diese Aufgabe wird mit einem Verfahren der eingangs bezeichneten Art erfindungsgemäß dadurch gelöst, daß zunächst auf die erste Lage aus zähflüssiger Cellulosemasse eine Zwischenlage aus Gewebe oder Netzen aus natürlicher oder künstlicher Faser aufgebracht wird, während die erste Lage noch zähflüssig ist, und daß anschließend die weitere Lage aus zähflüssiger Cellulosemasse auf die Zwischenlage und die darunter befindliche erste Lage aufgebracht wird und dann sämtliche Lagen miteinander verpreßt werden, während die erste und die weitere Lage noch zähflüssig sind.

Mit dem erfindungsgemäßen Verfahren ist es möglich, einen reißfesten Karton zur Verfügung zu stellen, der bei gleichen oder besseren Festigkeitseigenschaften gegenüber herkömmlichen Kartons einen wesentlich geringeren Anteil an Cellulose benötigt, d.h. es läßt sich bei wesentlich geringerem Materialverbrauch mit wesentlich geringeren Kartonwandstärken ein Karton herstellen, der die gleichen Festigkeitseigenschaften aufweist. Dabei entsteht durch die Verbindung der feuchten zähflüssigen Celluloselagen mit der zwischengelegten netzgewebeartigen Struktur aus natürlichen oder künstlichen Fasern und anschließendes Verpressen ein Verbundkörper, d.h. die Fasern der beiden Lager greifen ineinander und zwischen die Gewebestruktur, so daß ein völlig einheitlicher Körper in einem Herstellungsgang entsteht.

Dabei ist aufgrund der Anordnung der zwischengelegten Gewebelage die Reißfestigkeit des Kartons in allen Richtungen etwa gleich groß. Aufgrund des wesentlich geringeren Celluloseanteils gegenüber bekannten Kartons läßt sich entsprechend auch der Energie- und Wasseraufwand entscheidend verringern.

Besonders vorteilhaft ist es, wenn als Cellulosemasse Altpapier eingesetzt wird. Gegenüber bekannten derartigen Kartons, für die ein Einsatz von Altpapier nicht möglich ist, da Altpapiercellulosefasern vergleichsweise kurzfaserig sind und deshalb nicht die erforderlichen Festigkeitseigenschaften aufweisen, ist es erfindungsgemäß möglich, nur Altpapier einzusetzen, da die Festigkeit des Kartons durch die enge Verbindung zwischen den Cellulosefasern und dem eingeschlossenen Netzgewebe entsteht. Gleichzeitig läßt sich durch den Einsatz von Altpapier der Energie- und Wasserbedarf bei der Herstellung noch weiter verringern.

Für eine besonders hohe Reißfestigkeit und besonders gute Verbundkörperausbildung ist vorgesehen, daß die Zwischenlage vor Aufbringung auf die erste Lage mit einem wasserlöslichen organischen Kleber beschichtet wird. Wird dann die Zwischenlage auf die erste Lage aus Cellulosemasse, die sich im zähflüssigen Zustand befindet, aufgebracht, so wird der organische Kleber gelöst und entfaltet seine Klebefunktion, wodurch dann durch Verpressen eine besonders gute Verbindung zwischen der ersten Lage und der Celluloselage entsteht.

Dabei ist vorteilhaft dann auch vorgesehen, daß vor Aufbringung der weiteren Lage aus zähflüssiger Cellulosemasse auf die Aufbringseite derselben ein organischer wasserlöslicher Kleber aufpulverisiert wird, so daß dann ebenfalls eine besonders gute Verbindung zwischen dieser Celluloselage und dem Gewebe sowie der unteren Celluloselage entsteht.

In Weiterbildung der Erfindung ist vorgesehen, daß nach dem Verpressen sämtlicher Lagen wenigstens eine weitere, insbesondere bedruckbare Decklage aufgebracht wird. Diese zusätzliche Ausgestaltung ist dann erforderlich, wenn ein bedruckbarer Karton gewünscht wird, wobei dann die bedruckbare Fläche von der Decklage gebildet wird. Diese Decklage kann jedoch eine sehr geringe Wandstärke aufweisen, da sie nicht wesentlich zur eigentlichen Festigkeit des Kartons beiträgt.

Die Erfindung ist nachstehend anhand der Zeichnung beispielsweise näher erläutert. Diese zeigt in:
- Fig. 1: eine Aufsicht auf einen erfindungsgemäßen Karton,
- Fig. 2: einen vergrößerten Schnitt durch einen Karton nach Fig. 1,
- Fig. 3: einen Schnitt gemäß der Linie III-III in Fig. 2,
- Fig. 4: einen Schnitt durch einen Karton nach einer anderen Ausführungsform und
- Fig. 5: in Prinzipdarstellung eine Maschine zur Durchführung des erfindungsgemäßen verfahrens zur Herstellung des erfindungsgemäßen Kartons.

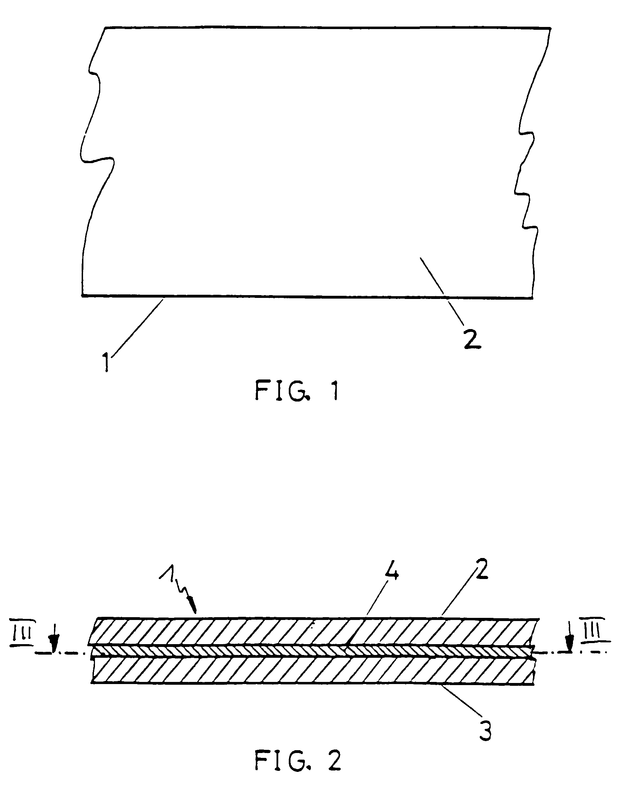

Ein allgemein mit 1 bezeichneter erfindungsgemäßer Karton mit hoher Reißfestigkeit weist beim Ausführungsbeispiel nach Fig. 2 zwei äußere Celluloselagen auf, eine erste Celluloselage 2 und eine zweite Celluloselage 3. Dabei bestehen diese Celluloselagen bevorzugt aus Altpapier, hier können aber selbstverständlich auch andere Cellulosefasern eingesetzt werden.

Zwischen den beiden Celluloselagen 2 und 3 ist eine gewebeartige Struktur 4 aus natürlichen oder künstlichen Fasern angeordnet. Dabei können beispielsweise netzartige Fasern aus Baumwolle, Wolle oder Seide oder aus Dralon cder Polyester eingesetzt werden. Die gewebeartige Struktur 4 kann dabei unterschiedlich ausgebildet sein, die Maschen können unterschiedliche Abstände aufweisen, für besonders reißfeste Kartons 1 wird ein entsprechend geringer Maschenabstand gewählt.

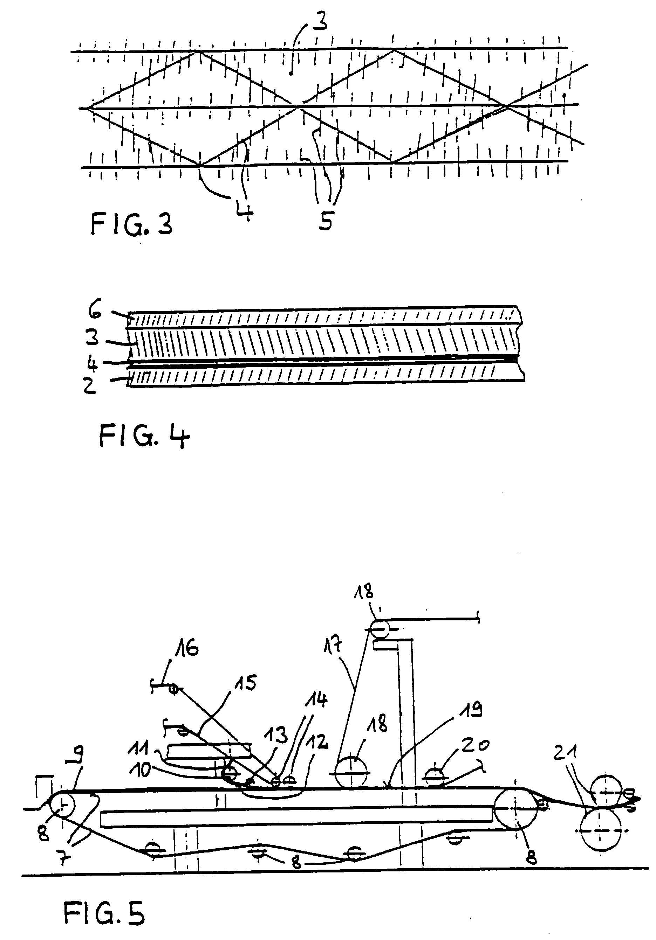

Der Karton 1 aus wenigstens zwei Celluloselagen 2 und 3 und die dazwischen angeordnete Gewebestruktur 4 ist als Verbundkörper ausgebildet, d.h. durch ein nachfolgend noch beschriebenes Herstellungsverfahren ist gewährleistet, daß die Fasern der beiden Celluloselagen, diese sind in Fig. 3 mit dem Bezugszeichen 5 angedeutet, einerseits zwischen die Gewebestruktur 4 und andererseits zwischen die Fasern der darauf angeordneten anderen Celluloselage 2 bzw. 3 greifen. Die Fasern 5 verhaKen sich somit ineinander und mit der Gewebestruktur 4, so daß eine innige Verbindung der einzelnen Lagen 2, 3, 4 stattfindet.

Auch wenn dies in den Figuren 2 und 3 nicht dargestellt ist, kann zur Verbesserung der Verbindung und zur Erzielung einer noch höheren Reißfestigkeit vorgesehen sein, daß zwischen den einzelnen Lagen jeweils eine wasserlösliche organische Klebstoffschicht angeordnet ist, die eine entsprechend noch bessere Verbindung der einzelnen Lagen bewirkt.

Fig. 4 zeigt eine weitere Ausgestaltung der Erfindung. Auch bei dieser Ausführungsform sind zunächst zwei Celluloselagen 2 und 3 vorgesehen, zwischen denen die netzgewebeartige Strukturschicht 4 angeordnet ist. Auf der Oberseite der zweiten Celluloselage 3 ist jedoch zusätzlich noch eine weitere Lage 6 aus Cellulose, insbesondere gebleichter Cellulose vorgesehen, die auf die Celluloselage 3 aufgeklebt sein kann. Diese Lage eignet sich zum Bedrucken, so daß der Karton 1, wenn er als Verpackung eingesetzt werden soll, gleichzeitig auch als Druckträger dienen kann. Dabei ist durch die Anordnung gewährleistet, daß selbst wenn sich bei der Herstellung des Kartons 1 die Gewebestruktur 4 in die Celluloselage 2 und 3 fortsetzt, eine vollständig glatte und einwandfreie obere Lage 6 des Kartons 1 zur Verfügung steht.

Wesentlich für die Erfindung ist die Art der Herstellung des Kartons 1. Zur Darstellung dieser Verfahrensweise ist in Fig. 5 in einer Prinzipskizze eine Maschine dargestellt, wobei auf einem umlaufenden siebförmigen Förderband 7 mit Antriebs- bzw. Umlenkrollen 8 zunächst eine zähflüssige Masse aus Cellulose zugeführt wird, die mit dem Bezugszeichen 9 angedeutet ist. Über eine entsprechende Antriebs- bzw. Umlenkrolle 10 wird gleichzeitig von oben ein Netzgewebe 11 aus natürlicher oder künstlicher Faser zugeführt, das beispielsweise eine Maschenstruktur 4 (Fig. 3) aufweist. Dieses Netzgewebe weist dabei die gleiche Breite auf wie die zugeführte zähflüssige Cellulosemasse 9. Bevorzugt ist dabei das Netzgewebe 11 auf der Auftragsseite mit einer Kleberschicht 12 mit wasserlöslichem organischen Kleber beschichtet.

Das Gewebe 11 wird dann mit der Kleberseite 12 auf die zähflüssige Cellulosemasse 9 geführt und auf diese mittels einer Walze 13 angedrückt derart, daß das Gewebe auf die feuchzte Cellulosemasse 9 aufgelegt wird.

Anschließend wird dann von oben, d.h. von der Seite, auf der die Gewebestruktur angeordnet ist, über eine entsprechende Walze 14 bzw. ggf. weitere Einrichtungen eine zweite zähflüssige lasse aus Cellulose zugeführt, die mit 15 bezeichnet ist. Diese Cellulosemasse 15 weist dabei bevorzugt ebenfalls auf der Autragsseite eine Kleberschicht aus organischen wasserlöslichen Material auf, die aufpulverisiert wird, entsprechende Düsen sind in der zeichnung nicht dargestellt. Diese zweite Cellulosemasse 15 wird ebenfalls über ein umlaufendes siebförmiges Transportband, das nur bereichsweise dargestellt ist, zugeführt (Bezugszeichen 16). Soll ein lithographischer Karton entstehen, wird anschließend noch eine weitere bedruckbare Lage bevorzugt aus reiner Cellulose zugeführt, diese ist in Fig. 5 mit dem Bezugszeichen 17 angedeutet, entsprechende Transport- bzw. Zuführwalzen sind mit 18 bezeichnet. Im Bereich 19 des Transportbandes 7 liegt somit ein vierlagiger Aufbau vor, wie dieser in Fig. 4 dargestellt ist. Um eine einwandfreie Verbindung der einzelnen Lagen zu einen Verbundkörper zu gewährleisten, Werden die übereinanderliegenden vier Lagen in mehreren Preßvorgängen im feuchten Zustand zu einem Verbundkörper zusammengepreßt, entsprechende Preßwalzen sind teilweise dargestellt und mit 20 und 21 bezeichnet, wobei die Preßwalze 21 bevorzugt als Saugwalze ausgebildet ist, d.h. in dieser Walze wird bereits ein Teil des Wassers entzogen. Durch die Verpressung greifen die quellenden Fasern der Cellulosemassen (Bezugszeichen 5 In Fig. 3) in die Gewebestruktur 4 ein und verhaken sich an dieser sowie an den jeweils anderen Celluloselagen.

Wesentlich ist demnach bei der erfindungsgemäßen Verfahrensführung, daß die einzelnen Lagen im zähflüssigen, d.h. feuchten Zustand der Cellulcsenassen aufeinandergeführt werden und verpreßt werden, derart, daß eine innige Verbindung zwischen den einzelnen Lagen entsteht, also ein Verbundkörper, bei dem die einzelnen Lagen mit ihren im noch feuchten Zustand quellenden Fasern 5 ineinandergreifen und insbesondere auch die Gewebestruktur 4 umgreifen. Die jeweils erforderliche Wassermenge und der Zusammenpreßdruck hängen dabei jeweils vom Cellulosematerial ab. Der fertige Karton 1 wird anschließend einer Trocknung zugeführt und kann dann nachfolgend entsprechend zugeschnitten werden oder dergl.

In bestimmten Einsatzfällen kann zur noch besseren verbindung der einzelnen Lagen auch vorgesehen sein, daß zwischen die Lagen Stärke eingebracht wird oder daß die Lagen unterschiedlich elektrisch beladen werden, um eine anschließende Anziehung zu bewirken.

Es hat sich herausgestellt, daß ein derartiger Karton eine hervorragende Reißfestigkeit aufweist, wobei gegenüber bekannten Kraftlinern aus natürlicher Faser, d.h. aus entsprechenden langfaserigen Hölzern, zum einen wesentlich weniger Cellulosematerial benötigt wird, da wesentlich geringere Wandstärken bei gleicher Festigkeit benötigt werden, und zum anderen auch reines Altpapier für die Celluloselagen eingesetzt werden kann, da die eigentliche Festigkeit durch den Verbund zwischen den auch kurzen Fasern der Celluloselagen und der dazwischen angeordneten Gewebestruktur 4 entsteht. Aufgrund des wesentlich geringeren Cellulosebedarfs und insbesondere beim Einsatz von Altpapier werden wesentlich geringere Energie- und Wassermengen für die gleiche Kartonmenge gegenüber herkömmlichen Kartons benötigt.

Zur Veranschaulichung der Vorteile des neuartigen Kartons gegenüber bekannten Kartons ist nachfolgend noch ein Vergleichsbeispiel aufgeführt, wobei ein herkömmlicher Karton und ein erfindungsgemäßer Karton jeweils mit einem Gewicht von 508 g/m² untersucht werden:

### Versuchsmessungen von Kartonwiderstandswerten:

| | erfindungsgem. Karton | | normaler Karton | |
|---|---|---|---|---|
| | Längsrichtung | Querrichtung | Längsrichtung | Querrichtung |
| - Druck zum Aufplatzen des Kartons (kg/cm²) | 5,1 | | 5,2 | |
| | | | | |
| - Kraft zum Auseinanderreißen (N) | 220 | 128 | 210 | 103 |
| | | | | |
| - Längenzunahme des Kartons bis zum Reißen (%) | 1,3 | 3,3 | 1,6 | 3,2 |
| | | | | |
| - Gewicht zum Zerreißen bei Torsionsbeanspruchung (g) | 896 | 726 | 238 | 287 |

Erkennbar weist somit der erfindungsgemäße Karton gegenüber herkömmlichen Kartons wesentlich verbesserte mechanische Eigenschaften auf.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen. So kann, wenn dies im einzelnen erforderlich ist, selbstverständlich der Karton auch aus mehr als zwei Celluloselagen 2,3 mit dazwischen jeweils angeordneter Gewebestruktur 4 ausgebildet sein und dergl. mehr.

## Patentansprüche

1. Verfahren zur Herstellung eines mehrlagigen Kartons, bei welchem auf eine erste feuchte Lage aus zähflüssiger Cellulosemasse wenigstens eine weitere feuchte Lage aus zähflüssiger Cellulosemasse aufgebracht wird und die Lagen anschließend miteinander zur Bildung des mehrlagigen Kartons verpreßt werden,
dadurch gekennzeichnet,
daß zunächst auf die erste Lage aus zähflüssiger Cellulosemasse eine Zwischenlage aus Gewebe oder Netzen aus natürlicher oder künstlicher Faser aufgebracht wird, während die erste Lage noch zähflüssig ist, und daß anschließend die weitere Lage aus zähflüssiger Cellulosemasse auf die Zwischenlage und die darunter befindliche erste Lage aufgebracht wird und dann sämtliche Lagen miteinander verpreßt werden, während die erste und die weitere Lage noch zähflüssig sind.

2. Verfahren nach Anspruch 1,
dadurch gekennzeichnet,
daß als Cellulosemasse Altpapier eingesetzt wird.

3. Verfahren nach Anspruch 1 oder 2,
dadurch gekennzeichnet,
daß die Zwischenlage vor Aufbringung auf die erste Lage mit einem wasserlöslichen organischen Kleber beschichtet wird.

4. Verfahren nach Anspruch 3,
dadurch gekennzeichnet,
daß vor Aufbringung der weiteren Lage aus zähflüssiger Cellulosemasse auf die Aufbringseite derselben ein organischer wasserlöslicher Kleber aufpulverisiert wird.

5. Verfahren nach Anspruch 1, 2, 3 oder 4,
dadurch gekennzeichnet,
daß nach dem Verpressen sämtlicher Lagen wenigstens eine weitere, insbesondere bedruckbare Decklage aufgebracht wird.

6. Verfahren nach Anspruch 1 oder einem der folgenden,
dadurch gekennzeichnet,
daß als Zwischenlage Baumwolle, Wolle, Seide oder Polyester eingesetzt wird.

## Claims

1. A process for producing a multi-layer cardboard wherein applied to a first moist layer of viscous cellulose material is at least one further moist layer of viscous cellulose material and the layers are then pressed together to form the multi-layer cardboard, characterised in that firstly an intermediate layer of fabric or gauzes of natural or synthetic fibres is applied to the first layer of viscous cellulose material while the first layer is still viscous and that then the further layer of viscous cellulose material is applied to the intermediate layer and the first layer therebeneath and then all layers are pressed together while the first and the further layers are still viscous.

2. A process according to claim 1 characterised in that used paper is employed as the cellulose material.

3. A process according to claim 1 or claim 2 characterised in that the intermediate layer is coated with a water-soluble organic adhesive before being applied to the first layer.

4. A process according to claim 3 characterised in that before the further layer of viscous cellulose material is applied an organic water-soluble adhesive is powdered on to the application side thereof.

5. A process according to claim 1, claim 2, claim 3 or claim 4 characterised in that after the step of pressing all the layers at least one further, in particular printable cover layer is applied.

6. A process according to claim 1 or one of the following claims characterised in that cotton, wool, silk or polyester is used as the interemdiate layer.

## Revendications

1. Procédé de fabrication d'un carton multicouche, dans lequel au moins une couche additionnelle humide en matière cellulosique visqueuse est déposée sur une première couche humide en matière cellulosique visqueuse et les couches sont ensuite pressées ensemble pour former le carton multicouche, caractérisé en ce qu'une couche intermédiaire à base de tissus ou de filets en fibres naturelles ou synthétiques est tout d'abord déposée sur la première couche en matière cellulosique visqueuse pendant que la première couche est encore visqueuse, que la couche additionnelle en matière cellulosique visqueuse est subséquemment appliquée sur la couche intermédiaire et sur la première couche sous-jacente et que l'ensemble des couches est ensuite pressé pendant que la première couche et la couche additionnelle sont encore visqueuses.

2. Procédé selon la revendication 2, caractérisé en ce que du papier de régénération est employé en tant que matière cellulosique.

3. Procédé selon la revendication 1 ou 2, caractérisé en ce que la couche intermédiaire est enduite d'un adhésif organique hydrosoluble avant application sur la première couche.

4. Procédé selon la revendication 3, caractérisé en ce que, avant application de la couche additionnelle en matière cellulosique visqueuse, un adhésif organique hydrosoluble est pulvérisé sur la face d'application de ladite couche.

5. Procédé selon la revendication 1, 2, 3 ou 4, caractérisé en ce qu'au moins une autre couche superficielle, en particulier imprimable, est appliquée après le pressage de l'ensemble des couches.

6. Procédé selon la revendication 1 ou l'une des revendications suivantes, caractérisé en ce que du coton, de la laine, de la soie ou du polyester est mis en oeuvre en tant que couche intermédiaire.
